# EUROPÄISCHE PATENTSCHRIFT

(11) **EP 1 761 131 B1**
(45) Veröffentlichungstag und Bekanntmachung des Hinweises auf die Patenterteilung: **17.09.2008**
(21) Anmeldenummer: 05755311.7
(22) Anmeldetag: 10.05.2005
(51) Int. Cl.: A22C 17/00

(54) **VORRICHTUNG ZUM ENTFERNEN DER RIPPEN AUS EINEM STÜCK EINES SCHLACHTTIERES**
DEVICE FOR REMOVING THE RIBS FROM A PIECE OF A SLAUGHTER ANIMAL
DISPOSITIF PERMETTANT DE RETIRER LES COTES D'UNE PIECE D'UN ANIMAL DE BOUCHERIE

(30) Priorität: 11.05.2004 DE 102004023733
(43) Veröffentlichungstag der Anmeldung: 14.03.2007
(73) Patentinhaber: Maja-Maschinenfabrik Hermann Schill GmbH & Co. KG, 77694 Kehl-Goldscheuer (DE)
(72) Erfinder: SCHILL, Joachim, 77694 Kehl (DE); ILCH, Hartmut, 77694 Kehl (DE)
(74) Vertreter: Lucht, Silvia
(86) Internationale Anmeldenummer: PCT/DE2005/000872
(87) Internationale Veröffentlichungsnummer: WO 2005/110105

(56) Entgegenhaltungen:
- EP-A- 0 469 680
- EP-A- 0 502 581
- US-A- 5 902 177
- PATENT ABSTRACTS OF JAPAN Bd. 014, Nr. 109 (C-0695), 28. Februar 1990 (1990-02-28) & JP 01 312962 A (YUKEN KOGYO KK; others: 01), 18. Dezember 1989 (1989-12-18)

## Beschreibung

### Stand der Technik

Die Erfindung geht aus von einer Vorrichtung zum Entfernen einzelner Rippen aus einem Stück eines Schlachttieres mit abgetrennter Wirbelsäule.

Bei einem Schlachttier, beispielsweise einem Schwein, einem Rind oder einem Schaf werden nach dem Abtrennen der Wirbelsäule die einzelnen Rippen entfernt. Dies geschieht in der Praxis von Hand mit Hilfe eines Rippenziehmessers. Dieses weist eine U-förmige Klinge und einen Griff auf. Der Bearbeiter setzt das Messer an der Schnittfläche, an der die Wirbelsäule abgetrennt wurde, an eine der Rippen an und zieht das Messer durch das Stück Schlachttier hindurch. Dabei wird eine Rippe aus dem Stück herausgetrennt. Diese Handlung ist so oft zu wiederholen, bis alle Rippen aus dem Stück herausgeschnitten sind. Der Vorgang ist daher zeit- und kraftaufwendig. Eine Verletzungsgefahr für den Bearbeiter kann außerdem nicht ausgeschlossen werden.

Aus dem Stand der Technik der EP 0 469 680 B1 ist eine Vorrichtung zum Entfernen von Rippen aus einem Bauchstück bekannt, bei der das Fleischstück in einem Rahmen befestigt wird und ein schleifenförmiges Messerelement mit Hilfe eines beweglichen Trägers die Rippen aus dem Fleischstück heraustrennt. Als nachteilig erweist sich, dass die Position der Rippen nicht bekannt ist und daher ein Bearbeiter das schleifenförmige Messerelement von Hand an der Rippe ansetzen muss. Darüber hinaus haben Rippen die Eigenschaft, dass sie nicht geradlinig und nicht einheitlich geformt sind. Rippen können außerdem aufgrund von Frakturen Verdickungen aufweisen. Das schleifenförmige Messerelement kann derartigen Unregelmäßigkeiten nicht problemlos folgen.

Aus der EP 0 971 595 B1 und der US 5,902,177 A sind ein Verfahren und eine Vorrichtung zum Entfernen des gesamten Rippenabschnitts von dem übrigen Stück bekannt. Das zwischen den Rippen befindliche Fleisch verbleibt damit am Rippenabschnitt. Derartige Rippenabschnitte werden zum Grillen als Spare Ribs verwendet. Die Dicke des Rippenabschnitts wird anhand der Rippen mit Hilfe einer Röntgeneinheit bestimmt. Diese hat den Nachteil, dass sie mit einem hohen Kostenaufwand verbunden ist und ein gewisses Gesundheitsrisiko birgt. Darüber hinaus ist das Entfernen einzelner Rippen mit der beschriebenen Vorrichtung nicht möglich.

### Die Erfindung und ihre Vorteile

Gegenüber dem Stand der Technik hat die erfindungsgemäße Vorrichtung den Vorteil, dass ein Rippen-Sensor die Position der Rippen nahe der Schnittfläche, an der die Wirbelsäule abgetrennt wurde, erkennt. Die ermittelten Daten werden an eine Steuerung weitergeleitet, welche den Antrieb eines Rippen-Schneidelements steuert. Dabei wird das Rippen-Schneidelement an die Schnittfläche des Stücks Schlachttier herangeführt und an eine Rippe angesetzt. Anschließend wird das Rippen-Schneidelement durch den Antrieb durch das Stück hindurch gezogen, bis die Rippe vollständig ausgelöst ist. Um den Vorgang zu beschleunigen, können mehrere Rippen-Schneidelemente zum gleichzeitigen Auslösen mehrerer Rippen vorgesehen sein. Das Stück Schlachttier ist auf einer Transporteinrichtung angeordnet. Diese dient sowohl dem Ausrichten des Stücks als auch dem Transport.

Als Rippen-Schneidelement ist ein Rippenziehmesser mit einer U-förmigen Klinge vorgesehen. Der Abstand der beiden Schenkel der Klinge ist an die Breite der auszulösenden Rippe angepasst. Je nach Art der zu bearbeitenden Tiere können unterschiedliche Rippenziehmesser verwendet werden. Vorteilhafterweise sind die beiden Enden der Schenkel an einer Rippen-Schneidelement-Halterung befestigt. Auf diese Weise wird eine hohe Stabilität erreicht.

Nach einer vorteilhaften Ausgestaltung der Erfindung ist als Transporteinrichtung eine bewegliche Platte mit einem Anschlag für die Schnittfläche vorgesehen. Der Anschlag sorgt dafür, dass die zu bearbeitenden Stücke jeweils gleich ausgerichtet sind. Die Vorrichtung benötigt damit lediglich noch die Information, ob es sich um eine linke oder rechte Tierhälfte handelt. Dies kann entweder in die Steuerung der Vorrichtung manuell eingegeben werden oder anhand einer Kamera mit Bildverarbeitung bestimmt werden. Das Stück Schlachttier wird so auf der Transporteinrichtung ausgerichtet, dass die Rippen an der Oberfläche der nach oben weisenden Seite liegen.

Nach einer weiteren vorteilhaften Ausgestaltung der Erfindung sind an der Transporteinrichtung Haltemittel zum Halten des Stücks Schlachttier vorgesehen. Dabei kann es sich zum Beispiel um Widerhaken oder Niederhalter handeln. Diese sorgen dafür, dass das Stück Schlachttier während des Vorgangs des Herauslösens einer Rippe seine Position auf der Transporteinrichtung nicht verändert. Beim Herauslösen einer Rippe wirken große Kräfte auf das Stück Schlachttier ein.

Nach einer weiteren vorteilhaften Ausgestaltung der Erfindung ist ein taktiler Rippen-Sensor vorgesehen. Dieser besteht aus mehreren Nadeln, welche in einer oder mehreren Reihen nebeneinander parallel angeordnet sind. Die Nadelreihen verlaufen senkrecht zu dem Rippenabschnitt nahe der Schnittfläche, an der die Wirbelsäule abgetrennt wurde. Ein Nadelantrieb drückt die mit Federn beaufschlagten Nadeln in das Stück Schlachttier hinein. Die Nadeln werden dabei nahe der Schnittfläche an das Stück Schlachttier angesetzt. Das Stück Schlachttier ist so auf der Transporteinrichtung ausgerichtet, dass die Rippen an der Oberfläche der nach oben weisenden Seite liegen und einige der Nadeln direkt auf die Rippen treffen. Dabei ist die Kraft, m it der die Nadeln in das Stück hineingedrückt werden, so eingestellt, dass die Nadeln in das Fleisch zwischen den Rippen eindringen können, jedoch in die Rippen nicht. Der Abstand zwischen den Nadeln ist dabei wesentlich kleiner, als der Abstand zwischen zwei Rippen. Eine Kamera mit einer Vorrichtung zur Bildverarbeitung erkennt die Positionen der den Spitzen abgewandten Enden der Nadeln. Dabei haben die in das Fleisch eingedrungenen Nadeln eine andere Position als diejenigen Nadeln, die mit ihrer Spitze auf Rippen gestoßen sind. Aus der Position der Nadelenden kann somit auf die Position der Rippen geschlossen werden. Zunächst können die Breite der Rippen, die Abstände zwischen den Rippen und der Abstand zwischen der Ausgangsposition der Nadeln und der nach oben weisenden Seite der Rippen bestimmt werden. Aus der Breite der Rippen kann die Rippendicke abgeleitet werden. Aus diesen Daten wird anschließend die Position bestimmt, an die das Rippen-Schneidelement durch den Antrieb geführt werden muss, um die einzelnen Rippen aus dem Stück herauszulösen. Der übrige Verlauf der Rippen im Stück muss nicht bekannt sein, um die Rippe herauszulösen, da das Rippen-Schneidelement mit der Rippen-Schneidelement-Halterung dem Verlauf folgen kann.

Die Länge der Nadelreihen kann so gewählt werden, dass die Positionen mehrerer Rippen nahe der Stirnfläche gleichzeitig bestimmt werden.

Nach einer weiteren vorteilhaften Ausgestaltung der Erfindung ist ein optischer Rippen-Sensor mit einer Kamera und einer Vorrichtung zur Bildverarbeitung vorgesehen. Dabei macht die Kamera eine Aufnahme von der nach oben weisenden Seite des Stücks Schlachttier. Die Aufnahme wird anhand einer Vorrichtung zur Bildverarbeitung analysiert, so dass die Positionen der Rippen insbesondere nahe der Schnittfläche des Stücks bestimmt werden können. Die Kamera ist dabei so ausgelegt, dass sie im Bereich des sichtbaren Lichts, im UV-Bereich oder im Röntgen-Bereich Bilder aufnimmt. Zur Verbesserung der Bildqualität kann das Stück Schlachttier mit Röntgenstrahlen, UV-Strahlen oder sichtbarem Licht bestrahlt werden. Dabei ist darauf zu achten, dass das Stück Schlachttier durch die Bestrahlung nicht erwärmt wird.

Nach einer weiteren vorteilhaften Ausgestaltung der Erfindung ist als Rippen-Schneidelement eine Schlinge aus einem Draht, einem Seil oder einer Schnur vorgesehen. Diese aus einem stabilen Material bestehende und durch den Antrieb bewegte Schlinge kann die Rippe von dem Fleisch ebenso abtrennen wir ein Rippenziehmesser. Gegenüber einem Rippenziehmesser hat eine Schlinge den Vorteil, dass sie flexibler ist und sich der Form und dem Verlauf einer Rippe besser anpassen kann.

Nach einer weiteren vorteilhaften Ausgestaltung der Erfindung ist als zusätzliches Schneidelement ein längliches Messer mit einer geradlinig verlaufenden Klinge vorgesehen zum Abschneiden einer Schicht von dem Stück, welche mehrere nebeneinander liegende Rippen und das dazwischenliegende Fleisch enthält. Dieses Messer ist zusätzlich zu einem U-förmigen Rippenziehmesser oder eine Schlinge an der Vorrichtung angeordnet , so dass sowohl einzelne Rippen als auch eine Schicht mit mehreren Rippen von dem Stück Schlachttier abgetrennt werden können.

Nach einer weiteren vorteilhaften Ausgestaltung der Erfindung ist eine Rippen-Schneidelement-Feder vorgesehen, welche das Rippen-Schneidelement an die Rippe heranzieht. Dadurch wird erreicht, dass beim Schneiden möglichst wenig Fleisch an der Rippe verbleibt. Außerdem sorgt die Feder dafür, dass das Rippen-Schneidelement Unregelmäßigkeiten der Rippe folgen kann.

Nach einer weiteren vorteilhaften Ausgestaltung der Erfindung ist die Rippen-Schneidelement-Halterung verschiebbar und/oder drehbar gelagert. Vorteilhafterweise erfolgt die Lagerung über Federn. Dadurch wird erreicht, dass das Rippen-Schneidelement dem unregelmäßigen Verlauf der Rippen folgen kann und sich auch bei Verdickungen oder extremen Krümmungen nicht in der Rippe verhaken kann.

Nach einer weiteren vorteilhaften Ausgestaltung der Erfindung ist an dem Rippen-Schneidelement ein Kraftmoment-Sensor vorgesehen. Sobald auf das Rippen-Schneidelement Kräfte oder Drehmomente einwirken, die eine vorgegebene Grenze überschreiten, sorgt die Steuerung des Antriebs des Rippen-Schneidelements dafür, dass die Richtung des Rippen-Schneidelements geändert wird. In diesem Fall ist eine verschiebbare oder drehbare Lagerung der Rippen-Schneidelement-Halterung nicht notwendig.

Nach einer weiteren vorteilhaften Ausgestaltung der Erfindung ist ein Tastmesser vorgesehen, welches in Bewegungsrichtung des Rippen-Schneidelements vor dem Rippen-Schneidelement angeordnet ist. Das Tastmesser weist eine flache geradlinige Klinge auf. Die Klinge ist parallel zur Bewegungsrichtung des Rippen-Schneidelements angeordnet. Beim Bewegen des Rippen-Schneidelements durch das Stück Schlachttier sitzt das Tastmesser an der nach oben weisenden Seite auf der Rippe auf. Es durchtrennt dabei die Knochenhaut an der Rippe. Sollte sich außerdem oberhalb der Rippe noch M agerfleisch befinden, so wird dieses ebenfalls mit dem Tastmesser durchtrennt. Das Tastmesser wird mit einer vorgegebenen Kraft an die Rippe angedrückt. Die Rippe hält diesem Druck stand. Der weichere Knorpel, der sich im Bereich des Brustbeins an die Rippe anschließt, hält der Kraft nicht stand und gibt nach. Dadurch bewegt sich das Tastmesser nach unten. Diese Bewegung des Tastmessers wird anhand eines Sensors festgestellt. Die Steuerung schließt daraus, dass das Rippen-Schneidelement am Ende der Rippe angelangt ist. Das Rippen-Schneidelement wird daher noch über eine gewisse geringe Distanz in dem Stück weiterbewegt, um sicherzustellen, dass die gesamte Rippe ausgelöst wird.

Nach einer weiteren vorteilhaften Ausgestaltung der Erfindung ist ein Abschnittsmesser vorgesehen zum Abtrennen des dem Brustbein zugewandten Endes der Rippe von dem Stück Schlachttier. Sobald der an dem Tastmesser angeordnete Sensor das Erreichen des Endes der Rippe detektiert hat, und das Rippen-Schneidelement noch eine vorgegebene Distanz weiterbewegt wurde, wird das Abschnittsmesser nach unten gedrückt, so dass auch das dem Brustbein zugewandte Ende der Rippe von dem Stück abgeschnitten wird. Das Abschnittsmesser und das Tastmesser können in einer gemeinsamen Halterung befestigt sein. Diese Halterung ist verschiebbar an der Vorrichtung gelagert, so dass das Abschnittsmesser zum Abschneiden des dem Brustbein zugewandten Endes der Rippe nach unten gedrückt werden kann. Nach einer weiteren vorteilhaften Ausgestaltung der Erfindung ist an der Rippen-Schneidelement-Halterung oder an der Halterung des Tastmessers und des Abschnittsmessers eine verschiebbare Spannbacke zum Einklemmen der abgetrennten Rippe vorgesehen. Sobald das Abschnittsmesser den Knorpel am Ende der Rippe durchtrennt hat, wird die Spannbacke von oben auf die Rippe abgesenkt. Damit wird die Rippe von unten durch das Rippen-Schneidelement und von oben durch die Spannbacke gehalten. Durch Anheben der Spannbacke und des Rippen-Schneidelements wird die Rippe aus dem Stück Schlachttier herausgezogen. Die Rippe kann anschließend abtransportiert werden.

Nach einer weiteren vorteilhaften Ausgestaltung der Erfindung ist an der Rippen-Schneidelement-Halterung in Bewegungsrichtung hinter dem Rippen-Schneidelement ein Niederhalter für das bereits ausgelöste Teil der Rippe vorgesehen. Der bereits ausgelöste Abschnitt der Rippe hat die Tendenz sich nach oben aus dem Stück herauszuwölben. Dieser Effekt ist jedoch nicht erwünscht, da sich dabei auch die Position des in dem Stück noch verbleibenden Abschnitts der Rippe verändern kann. Um dem entgegenzuwirken, wird der bereits ausgelöste Abschnitt der Rippe durch den Niederhalter nach unten gedrückt.

Weitere Vorteile und vorteilhafte Ausgestaltungen der Erfindung sind der Zeichnung, der nachfolgenden Beschreibung und den Ansprüchen zu entnehmen.

### Zeichnung

In der Zeichnung ist ein Ausführungsbeispiel der erfindungsgemäßen Vorrichtung dargestellt. Dieses Ausführungsbeispiel ist im folgenden beschrieben. Es zeigen:
- Figur 1: Vorrichtung in perspektivischer Darstellung von vorne,
- Figur 2: Vorrichtung in perspektivischer Darstellung von hinten,
- Figur 3: Vorrichtung in perspektivischer Darstellung von unten,
- Figur 4: Vorrichtung in einer Seitenansicht,
- Figur 5: Vorrichtung in einer Ansicht von oben,
- Figur 6: Vorrichtung in einer Ansicht von hinten.

### Beschreibung des Ausführungsbeispiels

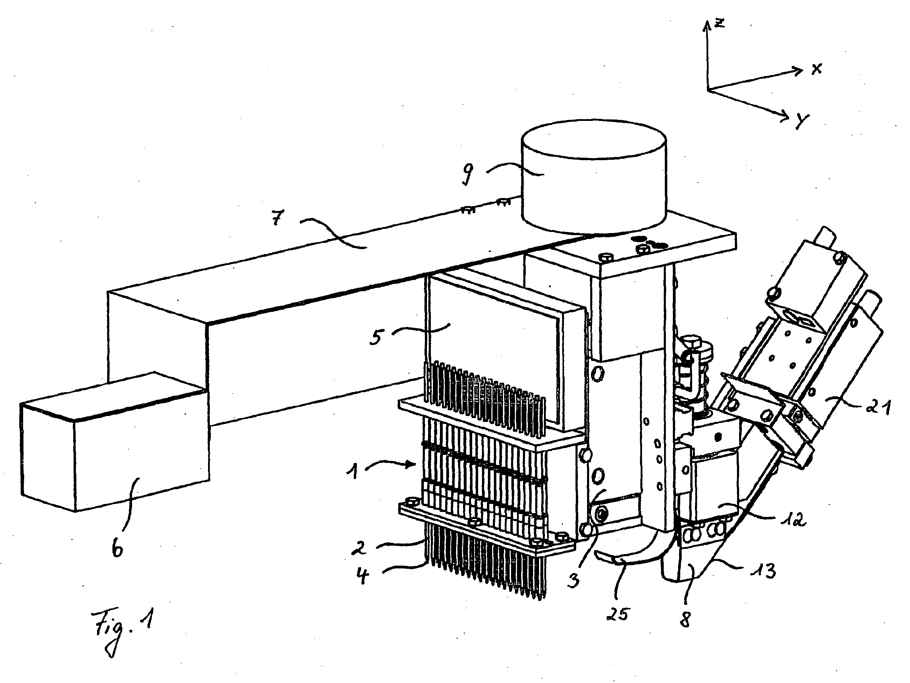

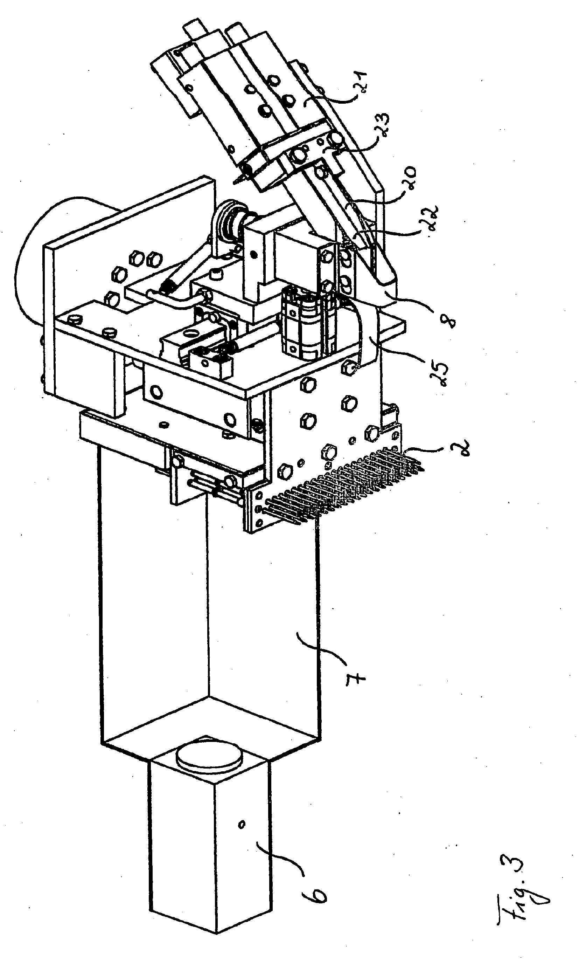

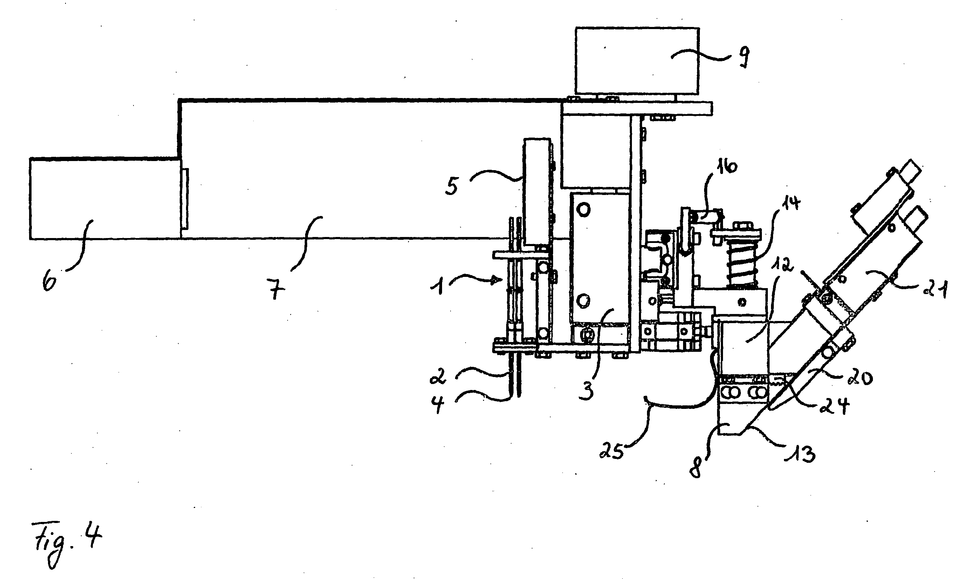

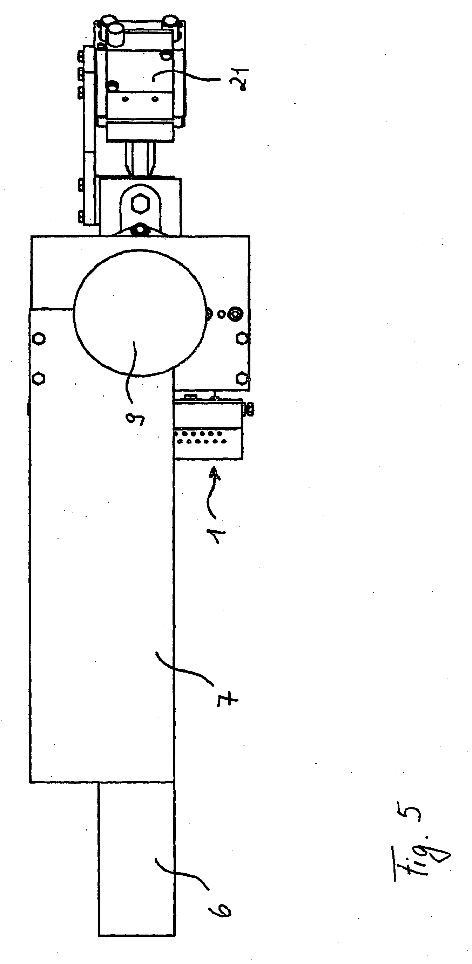

In den Figuren 1, 2 und 3 ist die Vorrichtung in perspektivischen Ansichten von verschiedenen Seiten dargestellt. Die Figuren 4, 5 und 6 zeigen Aufsichten von der Seite, von oben und von hinten. In Figur 1 ist im Vordergrund der taktile Sensor 1 mit mehreren in zwei Reihen nebeneinander angeordneten Nadeln 2 erkennbar. Der Nadelantrieb 3 bewegt die Nadeln an die Oberfläche eines in der Zeichnung nicht dargestellten Stücks Schlachttier heran und drückt die Nadeln gegen die Oberfläche. Sobald die Position der Rippen bestimmt worden ist, hebt der Nadelantrieb 3 die Nadeln wieder an. Die Spitzen 4 der Nadeln 2 weisen nach unten. Im Bereich der den Spitzen abgewandten Enden der Nadeln 2 ist eine Beleuchtung 5 vorgesehen. Sie erleichtert das Erkennen der Positionen der Nadelenden mit Hilfe einer Kamera 6. Im Ausgangszustand sind die Spitzen 4 der Nadeln und damit auch die abgewandten Enden der Nadeln auf demselben Niveau. Werden die Nadeln 2 durch den Nadelantrieb 3 jedoch gegen die Oberfläche eines in der Zeichnung nicht dargestellten Stücks Schlachttier mit Rippen gedrückt, so können einige der Nadeln in das Fleisch zwischen den Rippen eindringen, während die übrigen Nadeln durch die Rippen aufgehalten werden. Dadurch verändert sich die Position der Nadeln relativ zueinander. Die oberen Nadelenden vor der Beleuchtung 5 befinden sich daher auf unterschiedlichem Niveau. Mit der Kamera 6 wird eine Aufnahme der Nadelenden erstellt. Diese Aufnahme wird mit Hilfe einer Vorrichtung zur Bildverarbeitung, welche in der Zeichnung nicht dargestellt ist, analysiert. Aus den dabei gewonnenen Daten wird die Position der Rippen in dem Stück Schlachttier nahe der Schnittfläche, an der die Wirbelsäule abgetrennt wurde, bestimmt. Die Abdeckung 7 dient zum einen der Befestigung der Kamera an der Vorrichtung und schirmt außerdem Streulicht aus der Umgebung der Vorrichtung ab.

Nachdem die Position einer oder mehrerer Rippen mit Hilfe des taktilen Sensors 1 bestimmt wurde, wird das U-förmige Rippenziehmesser 8 an eine der Rippen im Bereich der Schnittfläche des Stücks herangeführt. Hierzu wird die gesamte Vorrichtung mit Hilfe eines Antriebs bewegt, der anhand einer Steuerung gesteuert wird. Die Steuerung erfolgt dabei durch die mit Hilfe des taktilen Sensors 1 gewonnenen Positionsdaten der Rippen. Die Aufgaben des Antriebs und der Steuerung können dabei auch von einem Roboter übernommen werden. Die Vorrichtung wird mit dem Adapter 9 an den Antrieb oder den Roboter angeflanscht.

Die Steuerung, der Motor und die Transporteinrichtung zum Transportieren und Ausrichten des Stücks Schlachttier sind in der Zeichnung nicht dargestellt.

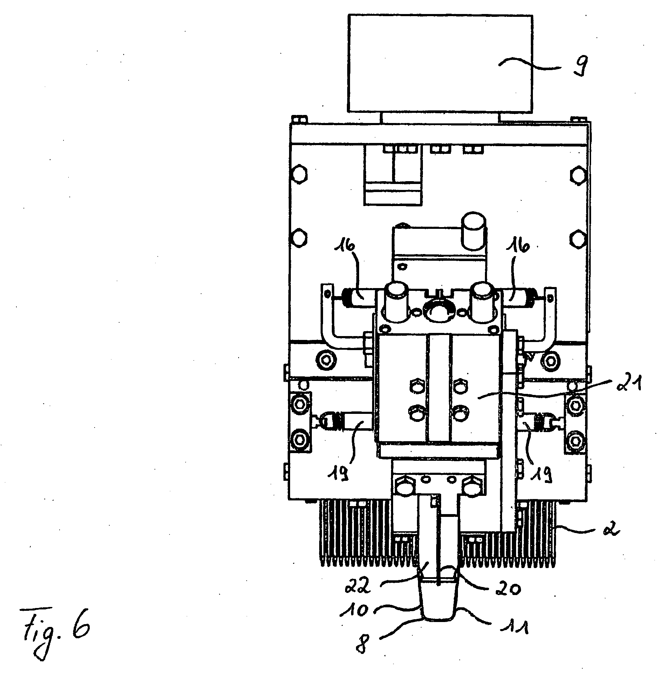

Das U-förmige Rippenziehmesser 8 ist mit seinen beiden Schenkeln 10 und 11 an der Rippen-Schneidelement-Halterung 12 befestigt. Die beiden Schenkel 10 und 11 sind in Figur 6 erkennbar. Im Bereich der scharfen Klinge 13 ist das Rippenziehmesser abgeschrägt. Dadurch wird erreicht, dass das Rippenziehmesser in Bewegungsrichtung einen ziehenden Schnitt ausführt.

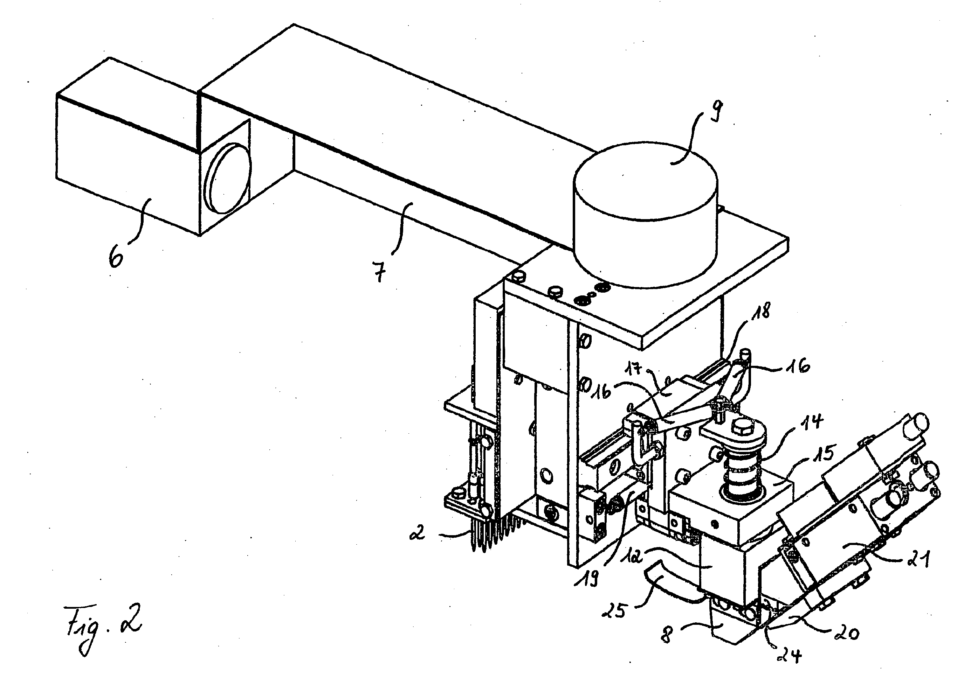

Die Rippen-Schneidelement-Halterung 12 mit dem federnden Toleranzausgleich ist in Figur 2 besonders gut erkennbar. Die Rippen-Schneidelement-Feder 14 sorgt dafür, dass das Rippenziehmesser von unten an die auszulösende Rippe herangezogen wird. Damit wird erreicht, dass möglichst wenig Fleisch an der ausgelösten Rippe verbleibt. Darüber hinaus gleicht die Rippen-Schneidelement-Feder 14 Unregelmäßigkeiten der Rippe in z-Richtung aus. In Figur 1 ist ein Koordinatensystem durch Pfeile dargestellt. Der genannte Ausgleich bezieht sich auf die in dem Koordinatensystem mit z gekennzeichnete Richtung. Darüber hinaus ist die Rippen-Schneidelement-Halterung 12 drehbar und verschiebbar gelagert. Durch eine Drehung der Rippen-Schneidelement-Halterung 12 gegenüber der Befestigung 15 werden die Federn 16 ausgelenkt. Es erfolgt daher ein federnder, rotierender Toleranzausgleich um eine Achse, welche parallel zur z-Achse verläuft. Die Befestigung 15 ist darüber hinaus mit einem Schlitten 17 verschiebbar in einer Führung 18 gelagert. Eine Verschiebung bewirkt eine Auslenkung der Federn 19. In Figur 2 ist lediglich eine der beiden Federn 19 dargestellt. Die andere Feder ist in Figur 6 erkennbar. Dadurch wird ein federnder linearer Toleranzausgleich des Rippenziehmessers in y-Richtung ermöglicht.

Die Bewegung des Rippenziehmessers beim Auslösen einer Rippe erfolgt in x-Richtung. In dieser Richtung ist vor dem Rippenziehmesser ein Tastmesser 20 angeordnet. Dieses ist in den Figuren 2, 3 und 4 erkennbar. Die Klinge des Tastmessers weist in Bewegungsrichtung und ist an der Spitze abgerundet. In der in der Zeichnung dargestellten Einstellung befindet sich das Tastmesser relativ zum Rippenziehmesser in einer angehobenen Stellung. In dieser Einstellung wird das Rippenziehmesser an die Rippe angesetzt. Anschließend wird das Rippenziehmesser über eine geringe Distanz in das Stück Schlachttier hineingezogen. Erst nachdem dieser Anschnitt erfolgt ist, wird das Tastmesser 20 von oben an die Rippe herangeführt. Das Tastmesser 20 wird durch die Hubeinheit 21 verschoben. Die Verschiebung erfolgt in einer Richtung parallel zur Klinge 13 des Rippenziehmessers. Das Tastmesser dient dazu, die Knochenhaut der Rippe und eventuell Magerfleisch auf der Rippe zu durchtrennen. Außerdem wird mit Hilfe des Tastmessers das den Brustbein zugewandte Ende der Rippe erkannt.

Zwischen dem Tastmesser 20 und dem Rippenziehmesser 8 befindet sich das Abschnittmesser 22. Das Tastmesser 20 und das Abschnittmesser 22 sind in derselben Halterung 23 befestigt. Die Spitze des Tastmessers 20 steht über die Spitze des Abschnittmessers 22 vor.

Die Kraft, mit der die Hubeinheit 21 das Tastmesser gegen die Rippenoberfläche drückt, ist so eingestellt, dass die Rippe dem Druck standhält, der sich im Bereich des Brustbeins an die Rippe anschließende Knorpel jedoch nicht. Erreicht das Tastmesser daher den Knorpel, so wird es durch die Kraft der Hubeinheit nach unten gedrückt. Diese Bewegung wird durch einen in der Zeichnung nicht dargestellten Sensor an der Hubeinheit 21 detektiert. Daraufhin wird die Kraft, mit der die Hubeinheit das Tastmesser und das Abschnittmesser nach unten drückt, erhöht. Dabei werden das Abschnittmesser und das Tastmesser relativ zum Rippenziehmesser 8 durch die Hubeinheit 21 nach unten gedrückt, so dass der Knorpel der Rippe durchtrennt wird. Bei dieser Bewegung wird eine Spannbacke 24 nach unten verschoben. Sie sorgt dafür, dass die bereits ausgelöste Rippe von unten durch das Rippenziehmesser 8 und von oben durch die Spannbacke 24 eingeklemmt wird. Auf diese Weise kann die ausgelöste Rippe von dem Fleischstück entfernt werden.

Der Niederhalter 25 dient dazu, dass der Abschnitt der bereits ausgelösten Rippe nach unten gedrückt wird.

### Bezugszahlenliste

- 1: taktiler Sensor
- 2: Nadel
- 3: Nadelantrieb
- 4: Spitze der Nadel
- 5: Beleuchtung der Nadelenden
- 6: Kamera
- 7: Abdeckung
- 8: Rippenziehmesser
- 9: Adapter
- 10: Schenkel des Rippenziehmessers
- 11: Schenkel des Rippenziehmessers
- 12: Rippen-Schneidelement-Halterung
- 13: Klinge des Rippenziehmessers
- 14: Rippen-Schneidelement-Feder
- 15: Befestigung
- 16: Feder
- 17: Schlitten
- 18: Führung
- 19: Feder
- 20: Tastmesser
- 21: Hubeinheit
- 22: Abschnittmesser
- 23: Halterung
- 24: Spannbacke
- 25: Niederhalter

## Patentansprüche

1. Vorrichtung zum Entfernen einzelner Rippen aus einem Stück eines Schlachttieres mit abgetrennter Wirbelsäule,
mit einer Transporteinrichtung zum Ausrichten des Stücks an der Schnittfläche, an der die Wirbelsäule abgetrennt wurde, und zum Transport der Stücke,
mit einem Rippen-Sensor (1) um die Position der einzelnen Rippen nahe der Schnittfläche zu ermitteln,
mit mindestens einem Rippen-Schneidelement (8) zum Heraustrennen einzelner Rippen aus dem Stück Schlachttier,
mit einem Antrieb des Rippen-Schneidelements, welcher das Rippen-Schneidelement (8) an der Schnittfläche des Stücks an die Rippen heranfährt und das Rippen-Schneidelement (8) entlang einer oder mehreren Rippen bewegt,
mit einer Steuerung, welche den Antrieb des Rippen-Schneidelements (8) entsprechend den durch den Rippen-Sensor (1) bestimmten Positionen steuert, wobei
als Rippen-Schneidelement ein U-förmiges Rippenziehmesser (8) vorgesehen ist, und
der Abstand der beiden Schenkel (10,11) des U-förmigen Rippenziehmessers an die Breite der auszulösenden Rippe angepasst ist.

2. Vorrichtung nach Anspruch 1, **dadurch gekennzeichnet, dass** als Transporteinrichtung eine bewegliche Platte mit einem Anschlag für die Schnittfläche vorgesehen ist.

3. Vorrichtung nach Anspruch 1 oder 2, **dadurch gekennzeichnet, dass** an der Transporteinrichtung Haltemittel zum Halten des Stücks vorgesehen sind.

4. Vorrichtung nach Anspruch 1, 2 oder 3, **dadurch gekennzeichnet, dass** ein taktiler Rippen-Sensor (1) vorgesehen ist, mit mehreren Nadeln (2), welche in einer oder mehreren Reihen nebeneinander angeordnet sind.

5. Vorrichtung nach Anspruch 4, **dadurch gekennzeichnet, dass** ein Nadelantrieb (3) vorgesehen ist, welcher die mit Federn beaufschlagten Nadeln in das Stück hineindrückt und anschließend wieder anhebt.

6. Vorrichtung nach Anspruch 4 oder 5, **dadurch gekennzeichnet, dass** eine Kamera (6) und einer Vorrichtung zur Bildverarbeitung zum Bestimmen der Position der den Spitzen (4) abgewandten Enden der Nadeln (2) vorgesehen sind.

7. Vorrichtung nach einem der vorhergehenden Ansprüche, **dadurch gekennzeichnet, dass** ein optischer Rippen-Sensor mit einer Kamera und einer Vorrichtung zur Bildverarbeitung vorgesehen ist.

8. Vorrichtung nach Anspruch 7, **dadurch gekennzeichnet, dass** eine Bestrahlungsquelle zum Bestrahlen des Stücks mit Röntgen-Strahlen, UV-Strahlen oder sichtbarem Licht vorgesehen ist.

9. Vorrichtung nach einem der Ansprüche 1 bis 8, **dadurch gekennzeichnet, dass** als Rippen-Schneidelement eine Schlinge aus einem Draht, einem Seil oder einer Schnur vorgesehen ist.

10. Vorrichtung nach einem der vorhergehenden Ansprüche, **dadurch gekennzeichnet, dass** als zusätzliches Schneidelement ein längliches Messer mit einer geradlinig verlaufenden Klinge vorgesehen ist zum Abschneiden einer Schicht von dem Stück, welche mehrere nebeneinander liegende Rippen und das dazwischenliegende Fleisch enthält.

11. Vorrichtung nach einem der vorhergehenden Ansprüche, **dadurch gekennzeichnet, dass** eine Rippen-Schneidelement-Feder (14) vorgesehen ist, welche das Rippen-Schneidelement (8) an eine Rippe heranzieht.

12. Vorrichtung nach einem der vorhergehenden Ansprüche, **dadurch gekennzeichnet, dass** eine Rippen-Schneidelement-Halterung (12) des Rippen-Schneidelements (8) vorgesehen ist, und dass die Rippen-Schneidelement-Halterung (12) verschiebbar und/ oder drehbar gelagert ist.

13. Vorrichtung nach Anspruch 12, **dadurch gekennzeichnet, dass** die Rippen-Schneidelement-Halterung (12) durch Federn (16, 19) gelagert ist.

14. Vorrichtung nach einem der vorhergehenden Ansprüche, **dadurch gekennzeichnet, dass** an dem Rippen-Schneidelement (8) ein Kraftmomentsensor vorgesehen ist.

15. Vorrichtung nach einem der vorhergehenden Ansprüche, **dadurch gekennzeichnet, dass** ein Tastmesser (20) vorgesehen ist, welches in Bewegungsrichtung des Rippen-Schneidelements (8) vor dem Rippen-Schneidelement (8) angeordnet ist, dass das Tastmesser (20) eine flache geradlinige Klinge aufweist, und dass die Klinge parallel zur Bewegungsrichtung des Rippen-Schneidelement angeordnet ist.

16. Vorrichtung nach Anspruch 15, **dadurch gekennzeichnet, dass** die Klinge des Tastmessers (20) in Bewegungsrichtung abgeschrägt oder abgerundet ist.

17. Vorrichtung nach einem der Ansprüche 15 oder 16, **dadurch gekennzeichnet, dass** an dem Tastmesser (20) ein Sensor zum Erkennen des dem Brustbein zugewandten Endes einer Rippe und des Übergangs von der Rippe zum Brustbeinknorpel vorgesehen ist.

18. Vorrichtung nach einem der vorhergehenden Ansprüche, **dadurch gekennzeichnet, dass** ein Abschnittmesser (22) vorgesehen ist zum Abtrennen des dem Brustbein zugewandten Endes der Rippe von dem Stück Schlachttier.

19. Vorrichtung nach Anspruch 15 und 18, **dadurch gekennzeichnet, dass** das Tastmesser (20) und das Abschnittmesser (22) an einer gemeinsamen Halterung (23) befestigt sind, und dass die Halterung verschiebbar an der Rippen-Schneidelement-Halterung (12) gelagert ist.

20. Vorrichtung nach Anspruch 12 oder 19, **dadurch gekennzeichnet, dass** an der Rippen-Schneidelement-Halterung (12) oder an der Halterung (23) des Tastmessers (20) und des Abschnittsmessers (22) eine verschiebbare Spannbacke (24) zum Einklemmen der abgetrennten Rippe vorgesehen ist.

21. Vorrichtung nach einem der vorhergehenden Ansprüche, **dadurch gekennzeichnet, dass** an der Rippen-Schneidelement-Halterung (12) ein Niederhalter (25) zum Niederhalten des bereits ausgelösten Teils einer Rippe vorgesehen ist.

## Claims

1. Device for removing individual ribs from a piece of a slaughter animal whose spinal column was cut off,
with a conveying device for aligning the piece on the cutting surface on which the spinal column was cut off and for conveying the pieces,
with a rib sensor (1) for detecting the position of the individual ribs near the cutting surface,
with at least one rib-cutting element (8) for detaching individual ribs from the piece of slaughter animal,
with a drive of the rib-cutting element that advances the rib-cutting element (8) on the cutting surface of the piece to the ribs and moves the rib-cutting element (8) along one or more ribs,
with a control that controls the drive of the rib-cutting element (8) in accordance with the positions determined by the rib sensor (1), whereby a U-shaped rib drawing knife (8) is provided as the rib-cutting element and the distance between the two jaws (10, 11) of the U-shaped rib drawing knife is adapted to the width of the ribs to be detached.

2. Device according to claim 1, **characterised in that** a movable plate with a stop for the cutting surface is provided as the conveying device.

3. Device according to claim 1 or 2, **characterised in that** holding means for holding the piece are provided on the conveying device.

4. Device according to claim 1, 2 or 3, **characterised in that** a tactile rib sensor (1) with several needles (2) arranged adjacent to each other in one or more rows is provided.

5. Device according to claim 4, **characterised in that** a needle drive (3) is provided which presses the sprung needles into the piece and subsequently raises them again.

6. Device according to claim 4 or 5, **characterised in that** a camera (6) and an image processing device for determining the position of those ends of the needles (2) facing away from the tips (4) are provided.

7. Device according to one of the previous claims, **characterised in that** an optical rib sensor with a camera and an image processing device is provided.

8. Device according to claim 7, **characterised in that** a radiation source for radiating the piece with X-rays, UV rays or visible light is provided.

9. Device according to one of claims 1 to 8, **characterised in that** a loop made of wire, rope or cord is provided as the rib-cutting element.

10. Device according to one of the previous claims, **characterised in that** an oblong knife with a rectilinear blade is provided as an additional cutting element for cutting off from the piece a layer containing several adjacent ribs and the meat between them.

11. Device according to one of the previous claims, **characterised in that** a rib-cutting element spring (14) that advances the rib-cutting element (8) to a rib is provided.

12. Device according to one of the previous claims, **characterised in that** a rib-cutting element mounting (12) of the rib-cutting element (8) is provided and that the rib-cutting element mounting (12) is carried in a movable and/or pivoting bearing.

13. Device according to claim 12, **characterised in that** the rib-cutting element mounting (12) is carried by springs (16, 19).

14. Device according to one of the previous claims, **characterised in that** a moment of force sensor is provided on the rib-cutting element (8).

15. Device according to one of the previous claims, **characterised in that** a feeler knife (20) is provided that is arranged in front of the rib-cutting element (8) in the direction of movement of the rib-cutting element (8), that the feeler knife (20) has a flat rectilinear blade and that the blade is arranged parallel to the direction of movement of the rib-cutting element.

16. Device according to claim 15, **characterised in that** the blade of the feeler knife (20) is bevelled or rounded in the direction of movement.

17. Device according to one of claims 15 or 16, **characterised in that** a sensor for detecting the end of a rib facing towards the breastbone and the transition from the rib to the breastbone cartilage is provided on the feeler knife (20).

18. Device according to one of the previous claims, **characterised in that** a severing knife (22) for detaching from the piece of slaughter animal the end of the rib facing towards the breastbone is provided.

19. Device according to claim 15 and 18, **characterised in that** the feeler knife (20) and the severing knife (22) are fixed on a common mounting (23) and that the mounting is movably carried on the rib-cutting element mounting (12).

20. Device according to claim 12 or 19, **characterised in that** a movable clamping jaw (24) for clamping the detached rib is provided on the rib-cutting element mounting (12) or on the mounting (23) of the feeler knife (20) and of the severing knife (22).

21. Device according to one of the previous claims, **characterised in that** a hold-down device (25) for holding down the already detached part of a rib is provided on the rib-cutting element mounting (12).

## Revendications

1. Dispositif permettant de retirer les côtes d'une pièce d'un animal de boucherie après le retrait de la colonne vertébrale,
avec un dispositif de transport destiné à l'ajustement de la pièce au niveau de la surface de découpe de la colonne vertébrale et au transport des pièces,
doté d'un capteur de côtes (1) pour définir la position de chaque côte près de la surface de coupe,
doté d'au moins un élément de découpe de côtes (8) pour découper chaque côte de la pièce de boucherie,
doté d'un entraînement de l'élément de découpe de côtes qui approche des côtes l'élément de découpe de côtes (8) au niveau de la surface de découpe de la pièce et déplace l'élément de découpe de côtes (8) le long d'une ou de plusieurs côtes,
doté d'une commande qui actionne l'entraînement de l'élément de découpe de côtes (8) en fonction des positions déterminées par le capteur de côtes (1),
un couteau à extraire les côtes en U (8) étant prévu pour faire office d'élément de découpe de côtes, et
l'écartement des deux lames (10, 11) du couteau en U à extraire les côtes étant adapté à la largeur de la côte à découper.

2. Dispositif selon la revendication 1, **caractérisé par le fait qu**'une plaque mobile dotée d'une butée pour la surface de coupe est prévue en guise de dispositif de transport.

3. Dispositif selon la revendication 1 ou 2, **caractérisé par le fait qu**'un système de retenue destiné à maintenir la pièce est prévu sur le dispositif de transport.

4. Dispositif selon la revendication 1, 2 ou 3, **caractérisé par le fait qu'**un capteur de côtes (1) tactile doté de plusieurs aiguilles (2) disposées les unes à côté des autres sur une ou plusieurs rangée(s) est prévu.

5. Dispositif selon la revendication 4, **caractérisé par le fait qu'**un entraînement d'aiguille (3) poussant les aiguilles à ressorts dans la pièce et les retirant ensuite, est prévu.

6. Dispositif selon la revendication 4 ou 5, **caractérisé par le fait qu'**une caméra (6) et un dispositif de traitement d'images sont prévus pour déterminer la position des extrémités des aiguilles (2) à l'opposé des pointes (4).

7. Dispositif selon l'une quelconque des revendications précédentes, **caractérisé par le fait qu**'un capteur de côtes optique doté d'une caméra et d'un dispositif de traitement d'images est prévu.

8. Dispositif selon la revendication 7, **caractérisé par le fait qu'**une source de rayonnement est prévue pour soumettre la pièce à des rayons X, des rayons UV ou à de la lumière visible.

9. Dispositif selon l'une quelconque des revendications 1 à 8, **caractérisé par le fait qu'**une lame en boucle composée d'un fil métallique, d'un câble ou d'un fil souple est prévue en tant qu'élément de découpe de côtes.

10. Dispositif selon l'une quelconque des revendications précédentes, **caractérisé par le fait qu'**un couteau allongé à lame droite est prévu en tant qu'élément de découpe supplémentaire pour découper une couche de la pièce, laquelle couche contenant plusieurs côtes disposées les unes à côté des autres et la chair qui se trouve entre les côtes.

11. Dispositif selon l'une quelconque des revendications précédentes, **caractérisé par le fait qu'**un ressort d'élément de découpe de côtes (14) est prévu pour approcher l'élément de découpe de côtes (8) d'une côte.

12. Dispositif selon l'une quelconque des revendications précédentes, **caractérisé par le fait qu'**une fixation (12) de l'élément de découpe de côtes (8) est prévue, cette fixation d'élément de découpe de côtes (12) pouvant être déplacée et/ou tournée.

13. Dispositif selon la revendication 12, **caractérisé par le fait que** la fixation d'élément de découpe de côtes (12) est montée sur des ressorts (16, 19).

14. Dispositif selon l'une quelconque des revendications précédentes, **caractérisé par le fait que** l'élément de découpe de côtes (8) est doté d'un capteur de force.

15. Dispositif selon l'une quelconque des revendications précédentes, **caractérisé par le fait qu'**un couteau à désosser (20) disposé devant l'élément de découpe de côtes (8) dans le sens de déplacement de l'élément de découpe de côtes (8) est prévu, que le couteau à désosser (20) présente une lame droite plate, et que la lame est parallèle au sens de déplacement de l'élément de découpe de côtes.

16. Dispositif selon la revendication 15, **caractérisé par le fait que** la lame du couteau à désosser (20) est biseautée ou arrondie dans le sens de déplacement.

17. Dispositif selon l'une quelconque des revendications 15 ou 16, **caractérisé par le fait qu'**un capteur destiné à détecter l'extrémité d'une côte du côté du sternum et la jonction entre la côte et le cartilage du sternum est prévu sur le couteau à désosser (20).

18. Dispositif selon l'une quelconque des revendications précédentes, **caractérisé par le fait qu'**un couteau de découpe (22) est prévu pour séparer l'extrémité de la côte de la pièce de l'animal de boucherie du côté du sternum.

19. Dispositif selon les revendications 15 et 18, **caractérisé par le fait que** le couteau à désosser (20) et le couteau de découpe (22) sont fixés à une fixation commune (23), cette fixation étant montée sur la fixation de l'élément de découpe de côtes (12) de manière à pouvoir être déplacée.

20. Dispositif selon la revendication 12 ou 19, **caractérisé par le fait qu'**une mâchoire de serrage (24) mobile est prévue sur la fixation de l'élément de découpe de côtes (12) ou sur la fixation (23) du couteau à désosser (20) et du couteau de découpe (22) pour serrer la côte séparée.

21. Dispositif selon l'une quelconque des revendications précédentes, **caractérisé par le fait qu'**un système de retenue (25) est prévu sur la fixation de l'élément de découpe de côtes (12) pour retenir la partie déjà découpée d'une côte.
